# EUROPEAN PATENT APPLICATION

(11) **EP 4 286 335 A1**
(43) Date of publication of application: **06.12.2023**
(21) Application number: 21916690.7
(22) Date of filing: 05.01.2021
(51) Int. Cl.: C01D 15/02, C01D 1/20, C01D 1/30

(54) **METHOD FOR THE PRODUCTION OF LITHIUM HYDROXIDE (LIOH) DIRECTLY FROM LITHIUM CHLORIDE (LICI), WITHOUT THE NEED FOR AN INTERMEDIATE PRODUCTION OF LITHIUM CARBONATE OR SIMILAR**

(71) Applicant: Sociedad Quimica y Minera de Chile, S.A., Las Condes, Santiago (CL)
(72) Inventor: MERUANE, Gabriel, Las Condes, Santiago (CL); MELIPILLAN, Pablo, Las Condes, Santiago (CL)
(74) Representative: Stolmár & Partner Patentanwälte PartG mbB
(86) International application number: PCT/CL2021/050003
(87) International publication number: WO 2022/147632

(57) **Abstract**

The present invention is directed to a method for the production of lithium hydroxide (LiOH) directly from lithium chloride (LiCI), without the need for an intermediate production of lithium carbonate or similar. Specifically, the invention teaches a method for producing lithium hydroxide directly from lithium chloride, wherein LiCI is converted to LiOH from a brine, the LiOH is then crystallised to obtain crude lithium hydroxide monohydrate (crude LiOH.H20) and then undergoes a second crystallization to produce pure LiOH.H20. Finally, it is dried and packaged.

## Description

### SUMMARY OF THE INVENTION

The current invention is directed to a method for the production of lithium hydroxide (LiOH) directly from lithium chloride (LiCI), without the need for an intermediate production of lithium carbonate or similar. Specifically, the invention teaches a method of direct production of lithium hydroxide from lithium chloride which contemplates the conversion of LiCI to LiOH from a brine, then crystallizes the LiOH to obtain crude lithium hydroxide monohydrate (LiOH. H2O crude) and then undergoes a second crystallization to produce pure LiOH.H2O. Finally, it is dried and packaged.

### BACKGROUND

The use of lithium in its multiple chemical formulations has taken on a relevant importance in the technological world in recent years. Among the formulations is lithium hydroxide, which is used mainly in the production of lubricating greases capable of operating under extreme temperature and conditions. Approximately 70% of the lubricating greases produced in the world contain lithium. Lithium hydroxide is also used in batteries and dyes. According to the publication from the Chilean Commission on Copper "INTERNATIONAL MARKET FOR LITHIUM AND ITS POTENTIAL IN CHILE," (Comisión Chilena del Cobre "MERCADO INTERNACIONAL DEL LITIO Y SU POTENCIAL EN CHILE) from 2017, Lithium is a metal with highly valued properties at present, that has high electrical conductivity, low viscosity, is very light, and has a low coefficient of thermal expansion. These qualities are favorable for multiple applications in the industrial sector, especially in the field of batteries, given the current technological trend. Electromobility driven by environmental campaigns and regulations to reduce the use of fossil fuels, added to the technological development of electronic devices and energy storage systems are the factors pushing up future demand for lithium. The significant growth projected for electric cars using rechargeable batteries as a source of energy has driven the projected demand for lithium, given the higher charge density of lithium-ion batteries and the fact that these have significantly decreased their price. Lithium is usually extracted from brine sources by pumping the brine to the surface to concentrate it in evaporation ponds in a number of solar ponds (conventional method), which finally produce a concentrated lithium chloride (LiCI) solution. This lithium-rich solution is then processed into a chemical plant to produce lithium carbonate or lithium hydroxide. In terms of products, the main lithium compounds marketed and produced are lithium carbonate (Li2CO3), lithium hydroxide monohydrated (LiOH.H2O), and lithium chloride (LiCI), where carbonate accounts for the largest production.

One of the advantages of lithium operations in salt flats have, is that the cost of pumping the brine, concentrating it in evaporation ponds, and further processing it in a chemical plant to obtain lithium carbonate or lithium hydroxide is less than the extraction from hard rocks resources. The latter type of extraction has processes that are similar to those of rock mining involving drilling, blasting, ore concentration, and transportation. With regard to lithium hydroxide (LiOH), it is produced from Lithium Carbonate or Lithium Sulphate, and there are not commercial manufacturing alternatives from Lithium Chloride (LiCI). The process from Li2CO3, makes this material react with slaked lime, Ca (OH)2, producing a solution of LiOH and a solid material of CaCO3 among other impurities. LiOH is separated from CaCO3 by solid-liquid separation stages and is subsequently concentrated and crystallized into its LiOH.H2O (LHM) form. Finally, the LHM crystal is dried to remove the remaining moisture and packaged, thus becoming the final product. One disadvantage of this process is to add the cost of producing Lithium Carbonate (LC) to the cost of producing LiOH. In addition, a final product with a higher carbon footprint is obtained. The method from Li2SO4, makes this material react with NaOH, producing LiOH and Na2SO4.10H2O (Glauber salt), which are separated by fractional crystallization. The LiOH in solution is crystallized to produce crude LiOH.H20 and then is subject to a second crystallization to produce pure LHM. Finally, it is dried and packaged. On the other hand, the Glauber salt is converted into sodium sulfate (Na2SO4) for commercial use through the stages of crystallization, drying, and packaging. Two disadvantages presented by this process areis a higher production cost than the LC method and the production of Na2SO4 that has to be marketed. On the other hand, it is known the attempt to produce LiOH from reacting LiCI and Sodium Hydroxide (NaOH), as our process suggests; however, it is understood that until now there are not successful attempts separating the 2 products produced, LiOH and NaCl, avoiding co-precipitation and contamination of LiOH with NaCl, at industrial stage or commercial plants. In the closest state of the art it is possible to find some variants to try to obtain high purity Lithium Hydroxide by conventional means as well as by electrolysis. Document RU2713360 describes the production of LiOH.H20 from lithiumcontaining sources of poly-component hydromineral raw material. The Method involves filtration of lithium-bearing brine contaminated with suspended particles with regeneration of filters and processing of spent regenerate and production of productive lithium-bearing brine, extraction from brine of lithium chloride in form of primary concentrate on sorption-desorption modules, nanofiltration cleaning of primary lithium concentrate from magnesium, calcium and sulphate ions. Primary lithium concentrate by reverse-osmotic, electrodialysis concentration, reagent, ion-exchange purification from impurities with subsequent thermal concentration is brought to productive lithium chloride concentrate, which by membrane electrolysis is converted into LiOH solution. LiOH solution is evaporated and LiOH·HO crystallized. This document proposes the conversion of LiCI into LiOH by means of an electrochemical process where, by applying a voltage difference the Lithium cation is separated from its Chlorine anion through the passage through a selective membrane. Once the Lithium went across the membrane it is forced to react with OH ions and is converted into LiOH. The Chlorine ion remains on the other side of the membrane; therefore, it does not mix with LiOH and there is no risk of co-precipitation. In the present invention LiOH is formed by means of a chemical reaction between LiCI and NaOH, then LiOH, and NaCl are formed, being both materials in contact. Therefore, the present invention is based on the separation of these 2 compounds, preventing cross-contamination. This separation occurs by the difference in the concentration and solubility of both materials, and the operating temperature of the process; therefore co-precipitation and contamination of the product is avoided.

Document CL2017-1123 describes a process for producing lithium hydroxide which comprising the following stages:
1. Causticization of lithium chloride with sodium hydroxide to produce a lithium hydroxide product;
2. Collecting solids resulting from the causticization of stage (1) and filter them thereof;
3. Filtered solids from stage (2) are passed to a heating stage, where lithium hydroxide anhydrous is produced;
4. Filtering of lithium hydroxide anhydrous product from stage (3); and
5. Cooling of the lithium hydroxide anhydrous stage (4) with water to produce lithium hydroxide monohydrate crystals.

This application also describes a process for the treatment of lithium chloride, obtained from the brine or spodumene sources, to produce a lithium hydroxide monohydrate product, where the process comprises the stages of:
(i) Pass the purified lithium chloride product obtained through a source of brine or spodumene, to react with a sodium hydroxide solution, thus producing lithium hydroxide;
(ii) A stoichiometric ratio for the LiCI and NaOH solutions is allowed to react in a series of reaction vessels (minimum three) for a residence time of fifteen minutes to one hour in each vessel, preferably half an hour, where this reaction is exothermic.
(iii) After completing the residence time of the stoichiometric solutions of LiCI and NaOH in each reaction vessel, the mass is filtered, consisting of precipitated lithium hydroxide monohydrate, sodium chloride and partly unreacted LiCI;
(iv) All the solids thus formed are collected in the three or more reaction vessels, while the exhausted mixture of the LiCI and NaOH solution is recycled to the first reaction vessel;
(v) The solids in stage (iv) are heated to approximately 500°C in a closed nitrogen atmosphere, thus melting the lithium hydroxide, which in turn is filtered through the use of optional ceramic filters; and
(vi) The anhydrous lithium hydroxide thus obtained is cooled with water to form lithium hydroxide monohydrate crystals, which are vacuum dried at 45° C, and packaged.

While the conversion to LiOH uses a theoretical foundation similar to the present invention, i.e., to chemically react LiCI with NaOH, the differentiation lies in the manner of separating the materials produced from NaCl and LiOH. Document CL2017-1123 proposes to separate LiOH from NaCl by means of a melting stage of the mixture of produced solids (NaCl-LiOH) at 500°C. This invention instead performs separation by fractional crystallization where the range of operating temperature, plus the difference in concentrations of the formed materials (NaCl and LiOH) and solubilities of both, NaCl and LiOH at the operating temperature, allows the separation of NaCl and LiOH in the LiOH reaction/crystallization system and in the NaCl system.

The separation method of LiOH from NaCl in the claimed invention represents a significant differentiation from the prior art. Thus, the advantages evidenced by the present invention are appreciated as follows: The production of LiOH from brine resources requires lithium carbonate (LC) as raw material, which is made from LiCI. The present invention proposes direct production of lithium hydroxide from LiCI, avoiding lithium carbonate as raw material. Advantages of the method:
- Feasibility of producing LiOH with no co-precipitation of NaCl.
- It does not require the production of lithium carbonate.
- Lower production costs of LiOH compared with methods from LC and Li2SO4
- It eliminates the use of Na2CO3, the main raw material for LC production and a chemical reagent with high CO2 footprint in its manufacture.
- It removes the use of Lime, a reagent with higher CO2 emissions in its manufacture than NaOH (used in new process).

### BRIEF DESCRIPTION OF DRAWINGS

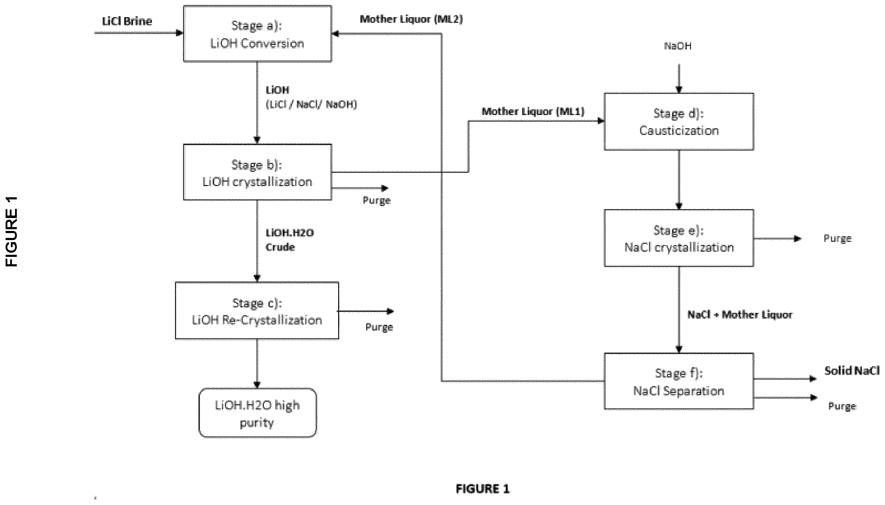

Figure 1: depicts a diagram of the method of the invention.

### DETAILED DESCRIPTION

The method of the invention consists of a method for producing lithium hydroxide monohydrate (LiOH.H2O) directly from lithium chloride (LiCI) brine by reaction with sodium hydroxide (NaOH). The method involves the following stages: a) Conversion of LiCI in LiOH. LiOH is produced from the reaction of a LiCI brine, where Li content ranges from 1% to 4% w/w and Li/Na ratio between 2 and 30, with a caustic solution (mother liquor or ML2) containing LiOH, NaOH and other ions. The ML2 is recycled from the stage f of the process and has a temperature between 80°C and 120°C. b) Crude LiOH crystallization. The LiOH formed in stage a), is fed into a fractional crystallization unit. This unit is operated between 20°C and 60°C and with a NaOH content between 10.5% w/w to 0.1% w/w. It produces crude crystals of LiOH.H2O (lithium hydroxide monohydrate), free of sodium chloride. The mother liquor produced, ML1 (liquid separated from the slurry) is sent to stage d). The crystallization of crude LiOH occurs by cooling crystallization. The temperature of the mother liquor from stage f) range from 80°C to 120°C. c) Recrystallization. The crude lithium hydroxide monohydrate produced in stage b) is dissolved in water and subject to a second crystallization in order to eliminate the remaining impurities in the product. This crystallization occurs at a range between 20°C and 120°C. The product obtained is high purity lithium hydroxide monohydrate, which is sent to subsequent drying and packaging stages, ready for commercialization.
d) Causticization. The mother liquor (ML1) from stage b) reacts with a NaOH solution and then fed to stage e).
e) NaCl Crystallization. The mixture of ML1 and NaOH from stage d, is subject to a fractional crystallization stage in a temperature range between 80°C and 120°C, where NaCl is separated from LiOH by crystallization and solid NaCl material is obtained with no co-precipitation of Lithium Hydroxide. This crystallization stage comprises the evaporation of part of the water contained in the mixture of ML1 and NaOH solution.
f) Separation of NaCl and ML2. The solid-liquid mixture formed in stage e) is fed to a separation process where a Mother Liquor 2 (ML2) is generated and separated from the sodium chloride (NaCl) crystals. The ML2 is sent to stage a) as a hydroxide source and the solid NaCl is ready for final disposal.

The liquid that is separated from the slurry in the crystallization stage of LiOH is the Mother Liquor 1 (ML1).

Its chemical composition as follows:
- NaOH: 0.5% to 7%
- LiOH: 3% to 6%
- NaCl: 14% to 20%
- Among other compounds such as LiCI, KCI, Mg compounds, Ca, Boron, H2O, and other elements contained in the raw materials.

At crystallization stage of LiOH (stage b) impurities tend to concentrate, so a purge of the mother liquor can be carried out to reduce the accumulation of impurities and thus avoid contaminants in the final product. The Mother Liquor 2 (ML2) produced in stage f) of NaCl crystallization, where ML2 is generated by separating the NaCl crystals from the liquid and is sent to stage a) as a hydroxide source, has the following characteristics:
- NaOH: 3% to 10%
- LiOH: 4% to 7%
- NaCl: 14% to 20%
- Among other compounds such as LiCI, KCI, Mg compounds, Ca, Boron, H2O, and other elements contained in the raw materials

At the NaCl crystallization stage (e) or NaCl separation stage (f) from ML2, a purge is also possible to prevent the accumulation of impurities in the final product.

In one preferred embodiment the method comprises the stages: a) LiCI conversion into LiOH and b) of crystallization of LiOH, are carried out simultaneously, this means in a single stage where the chemical reaction of the conversion of LiCI to LiOH and the phenomenon of crystallization of LiOH occur in a single reactor in a similarly simultaneous way. In preferred embodiment, the stages d) of caustisization, and e) of NaCl crystallization occur simultaneously, that is, caustisization and crystallization in a single reactor.

During the tests carried out for the application of the method it was found that data collected from the solubility tests showed that LiOH and NaCl become less soluble as the concentration of NaOH increases. Relative decrease in solubility of NaCl was shown to be greater than that of LiOH. Based on these data, 5% NaOH proves to be very useful for the crystallization operation of lithium hydroxide monohydrate at 35°C and 10% NaOH for the crystallization operation of sodium chloride at 100°C. For LiOH crystallization stage, at those operating conditions of temperature and concentration, it is verified that NaCl and LiOH are kept in solution; therefore, an increase in the concentration of Li+ and OH- ions up to the point of reaching LiOH saturation allows to achieve its crystallization or precipitation avoiding NaCl saturation and precipitation, as its concentration was not modified. The same principle is applied for the crystallization of NaCl and its separation from LiOH in solution. The purity of the lithium hydroxide monohydrate and sodium chloride crystals increased over time as the test progressed and less mother liquor was retained in the crystals. The amount of mother liquor retained in the lithium hydroxide monohydrate crystals decreased from 25% to 7.9% and from 7.6% to 4.2% in the sodium chloride crystals.

Although the caustisization stage contemplates that the mother liquor (ML1) from Stage b) reacts with a NaOH solution, preferably 50% by weight, it is also possible to carry out caustisization with a NaOH solution at different NaOH contents. During the crystallization stage of NaCl, it was evident that the solids contained both sodium chloride and lithium hydroxide; however, by adding less caustic solution and decreasing evaporation, the sodium chloride was successfully crystallized with no co-precipitation of Lithium Hydroxide. Particularly, in a first test the lithium hydroxide crystallization stage was carried out at 35°C. At the beginning of the test, excess LiOH.H2O was added and NaCl solids were added to ensure that the feed was saturated. Each solubility point varied in the amount of NaOH, and was allowed to mix for 45 minutes before sample collection. The five mother liquor samples were chemically analyzed and the results are shown in the table below:

| **Saturated Mother Liquor composition at 35°C** | | | | | | |
|---|---|---|---|---|---|---|
| Test *Identification* | | **Sample 1** | **Sample 2** | **Sample 3** | **Sample 4** | **Sample 5** |
| Li+ | wt% | 1,23 | 1,14 | 1,00 | 0,952 | 0,816 |
| Na+ | wt% | 10,2 | 10,3 | 10,7 | 11,1 | 11,8 |
| OH- | wt% | 5,24 | 5,39 | 5,64 | 5,92 | 6,46 |
| Cl- | wt% | 10,9 | 10,5 | 10,1 | 9,92 | 9,14 |
| CO3-2 | wt% | 0,024 | 0,026 | 0,019 | 0,019 | 0,023 |
| **NaOH** | **wt%** | **5,24** | **6,11** | **7,51** | **8,44** | **10,50** |
| **LiOH** | **wt%** | **4,24** | **3,93** | **3,45** | **3,28** | **2,82** |
| **NaCl** | **wt%** | **18,0** | **17,3** | **16,7** | **16,4** | **15,1** |

In a second test, the crystallization stage of lithium hydroxide, was performed at a temperature of 35 °C and an excess concentration of NaOH between 0.5% and 4%. At the beginning of the test, an excess of LiOH.H20 and NaCl solids was added to ensure that the mother liquor was saturated. Each solubility point varied in the amount of NaOH and was allowed to mix for 45 minutes before sample collection. The five mother liquor samples were chemically analyzed and the results are shown in the table below:

| | **Saturated Mother Liquor composition at 35°C** | | | | | | |
|---|---|---|---|---|---|---|---|
| Test *Identification* | | | **Sample 1** | **Sample 2** | **Sample 3** | **Sample 4** | **Sample 5** |
| Lithium | Li+ | wt% | 1,61 | 1,57 | 1,43 | 1,28 | 1,19 |
| Sodium | Na+ | wt% | 7,36 | 7,66 | 7,80 | 8,53 | 9,20 |
| Potassium | K+ | wt% | 1.38 | 1,4 | 1,33 | 1,32 | 1,29 |
| Hydroxide | OH- | wt% | 3,98 | 4,04 | 4,21 | 4,46 | 4,73 |
| Chloride | Cl- | wt% | 12,8 | 12,7 | 12,0 | 11,8 | 11,5 |
| | | | | | | | |
| **NaOH** | | **wt%** | **0,09** | **0,46** | **1,66** | **3,12** | **4,27** |
| **LiOH** | | **wt%** | **5,56** | **5,42** | **4,93** | **4,42** | **4,11** |
| **NaCl** | | **wt%** | **19,0** | **18,8** | **18,2** | **17,5** | **17,0** |
| **KCI** | | **wt%** | **2,63** | **2,67** | **2,54** | **2,52** | **2,46** |

Regarding the sodium chloride crystallization test, it was performed at 100 °C and an excess of NaOH concentration between 3% and 10%. At the beginning of the test, an excess of LiOH.H2O and NaCl solids was added to ensure that the liquor was saturated. Each solubility point varied in the amount of NaOH and was allowed to mix for 45 minutes before sample collection. The five mother liquor samples were chemically analyzed and the results are shown in the table below:

| **Saturated Mother Liquor composition at 100°C** | | | | | | | |
|---|---|---|---|---|---|---|---|
| Test *Identification* | | | **Sample 1** | **Sample 2** | **Sample 3** | **Sample 4** | **Sample 5** |
| Lithium | Li+ | wt% | 1,82 | 1,76 | 1,66 | 1,53 | 1,46 |
| Sodium | Na+ | wt% | 9,00 | 9,59 | 9,83 | 9,87 | 10,70 |
| Potassium | K+ | wt% | 1,78 | 1,78 | 1,77 | 1,69 | 1,70 |
| Hydroxide | OH- | wt% | 5,85 | 6,18 | 6,36 | 6,75 | 6,96 |
| | | | | | | | |
| Chloride | Cl- | wt% | 12,3 | 12,0 | 11,7 | 11,1 | 10,7 |
| | | | | | | | |
| **NaOH** | | **wt%** | **3,28** | **4,40** | **5,40** | **7,07** | **7,96** |
| **LiOH** | | **wt%** | **6,28** | **6,07** | **5,73** | **5,28** | **5,04** |
| **NaCl** | | **wt%** | **17,6** | **17,1** | **16,6** | **15,8** | **15,1** |
| **KCl** | | **wt%** | **3,39** | **3,39** | **3,37** | **3,22** | **3,24** |

Based on the solubility tests indicated above, the process was carried out in a continuous state, which yielded the following results: Chemical analysis of lithium hydroxide mother liquor 35 ° C

| **Parameters** | | **Unid.** | **Mother liquor samples at 35°C LiOH.H2O** | | | |
|---|---|---|---|---|---|---|
| *Sample Identification* | | | Sample 1 | Sample 2 | Sample 3 | Sample 4 |
| Lithium | Li+ | wt% | 1.30 | 1.29 | 1.23 | 1.14 |
| Sodium | Na+ | wt% | 10.1 | 10.1 | 9.97 | 10.1 |
| Potassium | K+ | wt% | 1.32 | 1.36 | 1.35 | 1.39 |
| | | | | | | |
| Hydroxide | OH- | wt% | 5.82 | 5.97 | 5.64 | 5.74 |
| Chloride | Cl- | wt% | 9.90 | 9.72 | 10.40 | 10.3 |
| | | | | | | |
| ***NaOH*** | | wt% | 6.20 | 6.61 | 6.18 | 6.94 |
| ***LiOH*** | | wt% | 4.49 | 4.45 | 4.24 | 3.93 |
| ***NaCl*** | | wt% | 14.4 | 14.0 | 15.1 | 14.9 |
| ***KCI*** | | wt% | 2.52 | 2.59 | 2.57 | 2.65 |

Chemical analysis of washed and unwashed LiOH.H2O solids at 35°C

| **Parameters** | | **Unid.** | **unwashed Solids** | **Washed Solids** |
|---|---|---|---|---|
| Sample *Identification* | | | Sample 1 | Sample 2 |
| Lithium | Li+ | wt% | 15.70 | 15.80 |
| Sodium | Na+ | wt% | 0.86 | 0.56 |
| Potassium | K+ | wt% | 0.076 | 0.032 |
| Hydroxide | OH- | wt% | 37.4 | 38.8 |
| Chloride | Cl- | wt% | 1.18 | 0.58 |
| | | | | |
| ***LiOH.H2O*** | | wt% | 94.9 | 95.5 |
| ***Retained Mother Liqueur*** | | wt% | 5.8 | -- |
| ***Displacement Mother Liquor*** | | wt% | -- | **58** |

Chemical analysis of the mother liquor of sodium chloride 100 ° C:

| **Parameters** | | **Unid.** | **Samples of NaCl Mother Liquor at 100°C** | | | |
|---|---|---|---|---|---|---|
| Sample *Identification* | | | Sample 1 | Sample 2 | Sample 3 | Sample 4 |
| Lithium | Li+ | wt% | 1.29 | 1.29 | 1.28 | 1.28 |
| Sodium | Na+ | wt% | 11.4 | 11.2 | 11.2 | 11.6 |
| Potassium | K+ | wt% | 1.44 | 1.45 | 1.5 | 1.56 |
| Hydroxide | OH- | wt% | 6.96 | 7.06 | 7.12 | 7.20 |
| Chloride | Cl- | wt% | 10.40 | 10.40 | 10.10 | 9.95 |
| | | | | | | |
| ***NaOH*** | | wt% | 8.94 | 9.18 | 9.38 | 9.56 |
| ***LiOH*** | | wt% | 4.45 | 4.45 | 4.42 | 4.42 |
| ***NaCl*** | | wt% | 15.0 | 15.0 | 14.4 | 14.1 |
| ***KCI*** | | wt% | 2.75 | 2.76 | 2.86 | 2.97 |

Chemical analysis of sodium chloride solids at 100 ° C:

| **Parameters** | | **Unid.** | **Unwashed solids NaCl at 100°C (wetcake)** | | | |
|---|---|---|---|---|---|---|
| | | | | | | |

| *Sample Identification* | | | Sample 1 | Sample 2 | Sample 3 | Sample 4 |
|---|---|---|---|---|---|---|
| Lithium | Li+ | wt% | 0.13 | 0.07 | 0.05 | 0.036 |
| Sodium | Na+ | wt% | 37.2 | 37.8 | 37.6 | 37.5 |
| Potassium | K+ | wt% | 0.11 | 0.09 | 0.071 | 0.065 |
| Hydroxide | OH- | wt% | 0.84 | 0.24 | 0.2 | 0.160 |
| Chloride | Cl- | wt% | 57.5 | 59.7 | 59.90 | 60.0 |
| | | | | | | |
| ***NaCl*** | | wt% | 94.6 | 98.3 | 98.6 | 98.8 |
| ***Retained Mother Liqueur*** | | wt% | 7.6 | 6.2 | 4.7 | 4.2 |

## Claims

1. A method for the production of lithium hydroxide monohydrate directly from lithium chloride brine by reaction with sodium hydroxide, which allows reducing the production costs of lithium hydroxide monohydrate and reduces CO2 emissions in its production, wherein it includes the following stages:
a. convert lithium chloride (LiCI) to lithium hydroxide (LiOH) from a brine with Li content between 1% and 4% w/w, Li/Na ratio between 2 and 30 to produce lithium hydroxide, LiOH, by reaction with a caustic solution (mother liquor 2 or ML2);
b. crystallize LiOH formed in stage a), by means of a fractional crystallization carried out in a temperature range between 20°C and 60°C, and in a NaOH concentration range between 10.5% w/w and 0.1% w/w, so as to produce a crude LiOH.H2O (lithium hydroxide monohydrate), with no sodium co-precipitation;
c. subjecting the crude lithium hydroxide monohydrate to recrystallization, where re-crystallization stage comprises its dissolution in water and then a second crystallization with the purpose of eliminating remaining impurities in the product, from which high purity lithium hydroxide monohydrate is obtained;
d. submitting the mother liquor (ML1) from Stage b) to Caustisization, by making the ML1 react with a NaOH solution and then feeding it to the next stage e);
e. subjecting this mixture of ML1 and NaOH from stage d) to a fractional crystallization stage in a temperature range between 80°C and 120°C, to separate NaCl from LiOH by means of this crystallization, in order to obtain solid NaCl with no lithium coprecipitation; and
f. submit the solid-liquid mixture formed in stage e) to a separation stage where a Mother Liquor 2 (ML2) is generated, which is separated from the sodium chloride (NaCl) crystals, where said ML2 is sent to stage a) as a source of hydroxide ions and the NaCl is left ready for final disposal

2. The method for production of lithium hydroxide monohydrate directly from lithium chloride brine according to claim 1, wherein such caustic solution contains LiOH, NaOH, LiCI and other ions, coming from stage f).

3. The method for the production of lithium hydroxide monohydrate directly from lithium chloride brine according to claim 2, wherein this caustic solution has a temperature between 80°C and 120°C

4. The method for the production of lithium hydroxide monohydrate directly from lithium chloride brine according to claim 1, wherein in this stage of crystallization of LiOH a liquid mother liquor (ML1) is generated and sent to stage d).

5. The method for the production of lithium hydroxide monohydrate directly from lithium chloride brine according to claim 4, wherein the crystallization of crude LiOH occurs by cooling crystallization because the mother liquor coming from stage f) has a temperature in a range between 80°C and 120°C.

6. The method for production of lithium hydroxide monohydrate directly from lithium chloride brine according to claim 1, wherein such re-crystallization stage is carried out in a temperature range between 20°C and 120°C.

7. The method for production of lithium hydroxide monohydrate directly from lithium chloride brine according to claim 1, wherein such high purity battery grade lithium hydroxide monohydrate is sent to subsequent drying and packaging stages, ready for commercialization.

8. The method for production of lithium hydroxide monohydrate directly from lithium chloride brine according to claim 1, wherein it comprises that the LiOH formed in stage a) is carried out at a temperature between 20°C and 60°C.

9. The method for the production of lithium hydroxide monohydrate directly from lithium chloride brine according to claim 1, wherein it comprises that such concentration range of NaOH in the stage a) of crystallization of LiOH is between 3% to 10%. 10.The method for the production of lithium hydroxide monohydrate directly from lithium chloride brine according to claim 1, wherein it comprises that fractional crystallization stage where solid NaCl is obtained with no presence of lithium co-precipitation is made at a temperature of 100°C 11.The method for production of lithium hydroxide monohydrate directly from lithium chloride brine according to claim 1, wherein it comprises that NaOH.

10. The method for the production of lithium hydroxide monohydrate directly from lithium chloride brine according to claim 1, wherein it comprises that fractional crystallization stage where solid NaCl is obtained with no presence of lithium co-precipitation is made at a temperature of 100°C

11. The method for production of lithium hydroxide monohydrate directly from lithium chloride brine according to claim 1, wherein it comprises that NaOH concentration in the stage e) of crystallization of NaCl, is in a range between 3% and 10%.

12. The method for the production of lithium hydroxide monohydrate directly from lithium chloride brine according to claim 1, wherein it comprises that in this stage e) of crystallization of NaCl, part of the water contained in the mixture of ML1 and NaOH is evaporated.

13. The method for production of lithium hydroxide monohydrate directly from lithium chloride brine according to claim 1, wherein it comprises that such liquid which is separated from the slurry in stage b) of crystallization of LiOH corresponds to Mother Liquor 1 (ML1) and has the following characteristics:
• NaOH: 0.5% to 7%
• LiOH: 3% to 6%
• NaCl: 14% to 20%

14. The method for production of lithium hydroxide monohydrate directly from lithium chloride brine according to claim 1, wherein it comprises that the crystallization stage of LiOH (stage b), perform a purge of mother liquor in order to reduce the accumulation of impurities and thus avoid impurities in the final product:

15. The method for the production of lithium hydroxide monohydrate directly from lithium chloride brine according to claim 1, wherein it comprises that the Mother Liquor 2 (ML2) that is generated in the stage f) of crystallization of NaCl, has the following characteristics:
• NaOH: 3% to 10%
• LiOH: 4% to 7%
• NaCl: 14% to 20%

16. The method for the production of lithium hydroxide monohydrate directly from lithium chloride brine according to claim 1, wherein it comprises that during the stage (e) of crystallization of NaCl or during the stage (f) of separation of NaCl from ML2, a purge may be performed to avoid the accumulation of impurities in the final product.

17. The method for production of lithium hydroxide monohydrate directly from lithium chloride brine according to claim 1, wherein it also comprises that these stages a) of conversion of LiCI to LiOH and b) of crystallization of LiOH, are carried out simultaneously, that is in a single stage where the conversion of LiCI into LiOH and the crystallization of crude LiOH occur.

18. The method for the production of lithium hydroxide monohydrate directly from lithium chloride brine according to claim 1, wherein it also comprises that these stages d) of caustisization and e) of NaCl crystallization are carried out simultaneously
